# FASCICULE DE BREVET EUROPEEN

(11) **EP 3 899 437 B1**
(45) Date de publication et mention de la délivrance du brevet: **16.11.2022**
(21) Numéro de dépôt: 19832697.7
(22) Date de dépôt: 23.12.2019
(51) Int. Cl.: G01D 21/00, G06K 19/077, G06K 19/07, H01F 17/00

(54) **SYSTEME DE DETECTION D'UNE EVOLUTION D'UN PARAMETRE ENVIRONNEMENTAL**
SYSTEM ZUR DETEKTION DES VERLAUFS EINES UMWELTPARAMETERS
SYSTEM FOR DETECTING THE COURSE OF AN ENVIRONMENTAL PARAMETER

(30) Priorité: 21.12.2018 FR 1874047
(43) Date de publication de la demande: 27.10.2021
(73) Titulaire: Commissariat à l'Énergie Atomique et aux Énergies Alternatives, 75015 Paris (FR)
(72) Inventeur: THOMAS, Thierry, 38054 GRENOBLE Cedex 09 (FR)
(74) Mandataire: INNOV-GROUP
(86) Numéro de dépôt international: PCT/EP2019/086954
(87) Numéro de publication internationale: WO 2020/128101

(56) Documents cités:
- US-A1- 2007 090 926
- US-A1- 2007 182 549
- US-A1- 2016 328 637

## Description

L'invention concerne les systèmes de détection à distance d'un changement dans l'état d'un objet dû à son environnement ou dans l'environnement proche de l'objet, en particulier à l'aide de circuits résonants.

Dans un certain nombre d'applications, il est important de pouvoir détecter un changement d'état de l'environnement. En particulier pour des raisons de sécurité, il peut être important de détecter l'apparition d'un polluant dans un environnement industriel ou encore de détecter la présence de liquide dans un milieu supposé étanche à l'intérieur de la paroi de la conduite. En particulier, pour des conduites flexibles d'exploitation pétrolière utilisées en mer, il peut s'avérer primordial de détecter l'apparition d'eau dans des zones supposées étanches. En effet, l'apparition d'eau indésirable dans la paroi d'une conduite flexible peut occasionner des phénomènes de corrosion des couches métalliques de renfort de la conduite s'accompagnant par la suite d'une dégradation accélérée de la conduite.

Le document US6025725 décrit un système de détection comprenant un dispositif de lecture et un module de détection. Le dispositif de lecture inclut un enroulement d'antenne d'interrogation. Le dispositif de détection est un circuit résonant passif de type LC. Le dispositif de lecture est lié à l'état électrique du module de détection par couplage inductif.

Le circuit résonant de ce document est sensible à un paramètre physique de l'environnement. Des paramètres environnementaux altèrent ainsi les paramètres électriques du circuit résonant du dispositif de détection, en altérant par exemple sa fréquence de résonance. Dans un exemple, le dispositif de détection comporte un substrat replié pour présenter deux faces en vis-à-vis. Chaque face comporte plusieurs enroulements conducteurs, les enroulements des deux faces étant interconnectés pour former un circuit résonant. Les deux faces du substrat sont séparées par une couche de diélectrique. La couche de diélectrique choisie dans un exemple est sensible à l'humidité. La variation des propriétés de cette couche de diélectrique altère la fréquence de résonance du circuit résonant.

Un inconvénient de ce dispositif est que, dans le cas d'une modification graduelle d'un circuit résonant de type LC fonction du paramètre physique environnemental à surveiller, celle-ci peuvent être en compétition avec des modifications parasites dues à un environnement difficile non maitrisé.

Un autre inconvénient de ce dispositif est que, dans le cas d'une modification importante du circuit résonant en fonction du paramètre physique environnemental à surveiller, le dispositif de détection ne peut être ni testé ni repéré pour cet état.

Enfin, si le résonateur est affecté par plusieurs paramètres physiques environnementaux, l'effet est globalisé sur un même résonateur ce qui ne permet pas de discriminer les différents paramètres. S'il peut être envisageable d'affecter deux paramètres électriques du résonateur, comme la fréquence de résonance et le facteur de qualité par exemple, cela reste limité et peut discriminant.

Le document US 2007/182549 A1 décrit un dispositif capteur RFID, comprenant une partie de détection avec un circuit résonant LC sensible à un paramètre environnemental ainsi qu'une partie RFID configurée pour communiquer en champ proche sans contact quelle que soit la valeur dudit paramètre environnemental.

L'invention vise à résoudre un ou plusieurs des inconvénients susmentionnés. L'invention porte ainsi sur un système de détection de l'évolution d'un paramètre environnemental, tel que défini dans les revendications annexées.

L'invention porte également sur les variantes des revendications dépendantes. L'homme du métier comprendra que chacune des caractéristiques de la description et des revendications dépendantes peut être combinée indépendamment aux caractéristiques d'une revendication indépendante, sans pour autant constituer une généralisation intermédiaire.

L'invention porte également sur un système, comprenant une conduite flexible et un système de détection tel que défini précédemment, dont ledit module de détection et ledit module de déclaration sont fixés dans l'épaisseur de la conduite à proximité de sa surface externe.

D'autres caractéristiques et avantages de l'invention ressortiront clairement de la description qui en est faite ci-après, à titre indicatif et nullement limitatif, en référence aux dessins annexés, dans lesquels :
[Fig.1] est une vue schématique d'un système de détection d'une évolution d'un paramètre environnemental selon un mode de réalisation de l'invention ;
[Fig.2] est une représentation schématique d'une variante d'un bloc de détection d'un système de détection selon un mode de réalisation de l'invention ;
[Fig.3] est une représentation schématique d'un module de déclaration selon un exemple de mise en œuvre ;
[Fig.4] est une représentation schématique d'un module de déclaration selon un autre exemple de mise en oeuvre ;
[Fig.5] est une représentation schématique d'un module de déclaration selon un autre exemple de mise en oeuvre ;
[Fig.6] est une représentation schématique d'un module de détection selon un exemple de mise en œuvre ;
[Fig.7] est une représentation schématique d'un module de détection selon un autre exemple de mise en œuvre ;
[Fig.8] et
[Fig.9] illustrent des pistes conductrices réalisables sur deux faces d'un substrat pour former des modules de détection selon les exemples des figures 6 ou 7 ;
[Fig.10] et
[Fig.11] sont des diagrammes illustrant les réponses en fréquence d'un module de détection en fonction de son mode ;
[Fig.12] et
[Fig.13] sont des diagrammes illustrant les réponses en fréquence d'un bloc de détection en fonction de son mode ;
[Fig.14] est une représentation schématique d'une autre variante d'un bloc de détection d'un système de détection selon un mode de réalisation de l'invention.

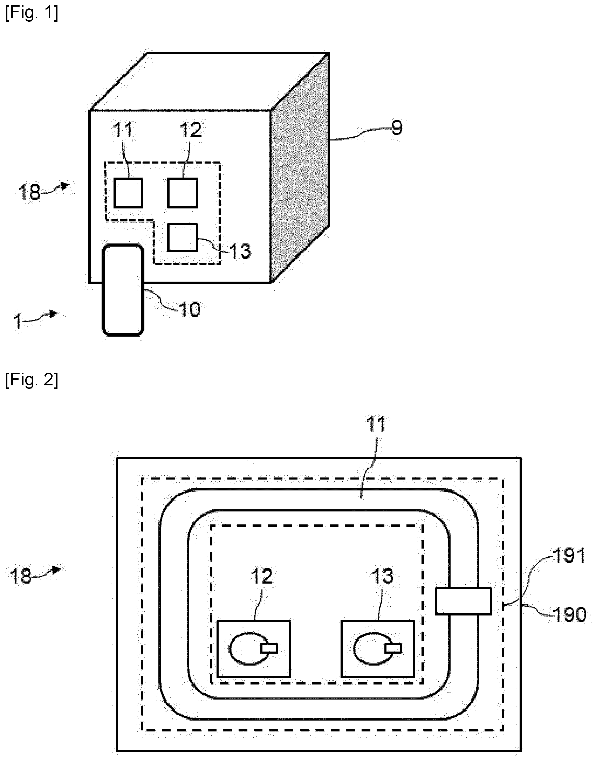

La figure 1 est une vue schématique d'un système de détection 1 d'une évolution d'un paramètre environnemental selon un mode de réalisation de l'invention. Le système de détection 1 comprend ici un bloc de détection 18 fixé à un objet 9, et un dispositif de lecture sans contact en champ proche 10. Le bloc de détection 18 du système de détection 1 comprend ici un module de déclaration 11, un module de détection 12 et un module de détection 13. Les modules de détection 12 et 13 et le module de déclaration 11 sont distincts, dépourvus de connexion électrique entre eux. Les modules de détection 12 et 13 et le module de déclaration 11 sont fixés sur un objet 9, pour lequel on souhaite évaluer l'évolution d'un ou plusieurs paramètres environnementaux. Les modules de détection 12 et 13 sont disposés à proximité du module de déclaration 11.

L'invention propose un système de détection 1 dans lequel le module de déclaration 11 est configuré pour être détectable par le dispositif de lecture 10 à proximité, en n'étant peu ou pas affecté par la variation du paramètre environnemental à étudier. Le module de déclaration 11 peut, par sa détection de présence, être configuré pour déclarer la présence des modules de détection 12 et 13 à proximité. Le module de déclaration 11 est ainsi configuré pour communiquer sans contact en champ proche avec le dispositif de lecture 10, indépendamment dudit paramètre environnemental.

L'invention propose un système de détection 1 dans lequel un ou plusieurs modules de détection 12 ou 13 incluent chacun un circuit résonant LC, sensible à une évolution d'un paramètre environnemental à étudier. Un tel circuit résonant LC présente ainsi des premier et deuxième modes de fonctionnement, en fonction de la valeur du paramètre environnemental à étudier :
- un premier mode de fonctionnement dans lequel ce circuit résonant présente une fréquence de résonance comprise dans une plage prédéfinie. Dans ce mode de fonctionnement nominal, la fréquence de résonance n'est pas suffisamment altérée par une variation du paramètre environnemental ;
- un deuxième mode de fonctionnement dans lequel ce circuit résonant présente une fréquence de résonance hors de ladite plage ou une absence de fréquence de résonance. Ce deuxième mode permettant de témoigner de la variation d'un paramètre environnemental.

Une logique inverse des premier et deuxième modes de fonctionnement peut également être envisagée : l'absence de fréquence de résonance ou la fréquence de résonance hors plage peut être attribuée au deuxième mode de fonctionnement.

La plage prédéfinie de la fréquence de résonance du circuit résonant LC peut aller de 0,9*f0 à 1,1*f0 par exemple, ou encore de 0,8*f0 à 1,2*f0, avec f0 la fréquence de résonance nominale (correspondant à la fréquence de résonance du circuit résonant LC dans des contions normales d'utilisation) du circuit résonant LC.

Le système de détection 1 est avantageusement basé sur une détection de type tout ou rien des modules de détection 12 et 13. Le principe de détection tout ou rien est basé sur une variation 'significative' d'un élément électrique passif, par exemple une piste conductrice, une piste résistive ou une capacité, suite à un changement de l'environnement proche de cet élément électrique. La variation de l'élément électrique passif peut être réversible ou irréversible. Les modules de détection 12 et 13 peuvent ainsi fonctionner en tout ou rien, en fonction de leur mode de fonctionnement.

Un tel fonctionnement tout ou rien s'avère particulièrement utile, en particulier si l'environnement électromagnétique est variable ou perturbé et empêche ainsi une détection d'une variation limitée de la fréquence de résonance du modules de détection 12 ou 13. Par une détection en tout ou rien, on peut détecter de façon robuste si les modules de détection 12 ou 13 sont dans un premier ou un deuxième mode de fonctionnement. Les modules de détection 12 et 13 peuvent être sensibles à des paramètres environnementaux différents.

En fonction du paramètre environnemental à étudier, un composant électrique peut présenter une rupture (par exemple un fusible) ou une forte variation d'une caractéristique électrique pour altérer la fréquence de résonance du circuit résonant au moins d'un facteur 2, de préférence d'un facteur 5.

Les changements d'état de l'environnement proche des modules de détection 12 ou 13 sont par exemple ceux qui peuvent conduire à la corrosion d'éléments métalliques entrant dans la structure de l'objet 9 auquel le système de détection 1 peut être associé. Il peut s'agir en particulier d'infiltration d'eau (eau douce ou eau salée) ou de gaz corrosifs (H₂S) ou de gaz indésirables pour certaines applications (CO₂).

Le système de détection 1 peut utiliser les principes techniques des étiquettes RFID passives pour le mode d'échange de données et pour le mode d'alimentation électrique par télé-alimentation.

La communication de données et l'alimentation à distance peuvent ainsi faire appel aux solutions techniques des étiquettes RFID, en particulier des étiquettes RFID LF ou HF utilisant un lien radiofréquence de type inductif. Cette technologie est utilisée par des systèmes d'identification standardisés, par exemple les systèmes aux normes ISO14443, ISO15693 et ISO18000-3 à la fréquence de 13.56MHz, et ISO18000-2 à une fréquence inférieure à 150kHz.

Le domaine de fréquence peut s'étendre du domaine des basses fréquences (LF : 30kHz - 300kHz) au domaine des hautes fréquences (HF : 3MHz - 30MHz). Les antennes forment alors typiquement un circuit résonant LC, l'inductance L étant formée par un bobinage dont la géométrie conditionne le couplage avec le champ électromagnétique (appelé circuit d'antenne par la suite du texte), la capacité C pouvant être intégrée (même partiellement) dans un circuit intégré.

La figure 2 est une représentation schématique d'un bloc de détection 18 d'un système 1 incluant un module de détection déclaration 11 et des modules de détection 12 et 13 selon un mode de réalisation de l'invention. Les modules 11 à 13 sont ici formés sur un même substrat 190, par exemple un film plastique flexible. La formation des modules 11 à 13 sur un même substrat permet d'agencer avec précision ces modules entre eux et permet de réduire le prix de fabrication du système 1. Afin d'assurer sa protection et son immunité par rapport à un ou plusieurs paramètres environnementaux à étudier, le module de déclaration 11 est protégé dans une zone 191 (illustrée en trait discontinu). Le module 11 peut ainsi être scellé entre un film de protection et le substrat 190. On peut par exemple utiliser un film de protection fin sur la zone 191, par exemple d'une épaisseur de 0,1mm, afin de favoriser la compacité du bloc de détection 18 du système 1 qui doit être associée à un objet 9. Le module 11 loge les modules 12 et 13 dans la partie médiane de son circuit d'antenne. La zone 191 ménage une ouverture dans laquelle les modules 12 et 13 sont disposés, donc non recouverts par la zone 191, tout en étant à proximité du module 11. Les modules 12 et 13 sont ainsi exposés au paramètre environnemental, en étant par exemple exposés à un fluide pouvant ou non inclure un polluant à détecter. Les modules 12 et 13 ou au moins un de leurs composants électriques ne sont pas recouverts par un film de protection. On peut également envisager que les dispositifs 12 et 13 soient disposés à la périphérie de la zone 191.

Dans cet exemple, le module 11 présente un circuit d'antenne par l'intermédiaire duquel ce module 11 est configuré pour communiquer avec le lecteur 10. Le circuit d'antenne du module 11 peut être couplé magnétiquement avec des circuits d'antenne des modules 12 et 13. Le circuit d'antenne du module 11 peut servir d'antenne relais pour les modules de détection 12 et 13, qui peuvent être pourvus de circuits d'antennes résonants de beaucoup plus petites tailles. On peut ainsi améliorer la portée des antennes des modules 12 et 13, même avec des tailles réduites.

Le module de déclaration 11 peut disposer d'un circuit d'antenne associé à une puce RFID toujours opérationnelle. Ce circuit d'antenne est du type résonateur LC. Cette puce RFID est une puce RFID principale dont le fonctionnement est non dégradé par les changements d'état de l'environnement à détecter.

Les circuits d'antenne des modules de détection 12 et 13 forment chacun un résonateur LC. Ce résonateur LC est fortement modifié par un des changements d'état de l'environnement à détecter (forte variation de sa fréquence de résonance ou forte réduction de son facteur de qualité). Ce résonateur peut être un simple circuit LC passif, et la détection du changement d'état peut alors s'effectuer sur l'analyse de la forme de sa réponse en fréquence. Ce changement d'état de l'environnement à détecter peut également induire un passage du résonateur d'un deuxième mode de fonctionnement vers le premier mode de fonctionnement.

Le module de détection 12 (ou 13) peut également inclure une puce RFID connectée au résonateur LC. La détection du changement d'état de l'environnement peut s'effectuer sur la lecture possible ou non de l'identifiant de la puce RFID connectée au résonateur du module de détection 12.

La lecture de l'identifiant de la puce RFID du module de déclaration 11 par le lecteur 10 permet de valider être en présence de ce module 11 (et donc du bloc de détection 18 du système de détection 1) en l'absence de réponse des modules de détection 12 et 13, afin d'éviter un faux diagnostic correspondant à une recherche qui serait effectuée par le lecteur 10 au mauvais endroit, à distance du module de déclaration 11.

Dans un mode préféré de l'invention, lors d'une lecture par le lecteur 10 à proximité du bloc de détection 18, le module de déclaration 11 transmet au lecteur 10 l'ensemble des informations concernant son environnement direct, et notamment les identifiants des puces RFID des modules de détection 12 et 13 qui lui sont associés. Le lecteur 10 connait ainsi l'ensemble des identifiants de modules de détection à rechercher en proche proximité du module de déclaration 11. En fonction des modules de détection reconnus ou non par le lecteur 10, le mode de fonctionnement de chacun des modules de détection associés au module de déclaration 11 qui sont en cours de lecture peut être déduit.

L'absence de réponse du module de déclaration 11 correspond soit à l'absence de celui-ci à proximité du lecteur 10, soit à son dysfonctionnement.

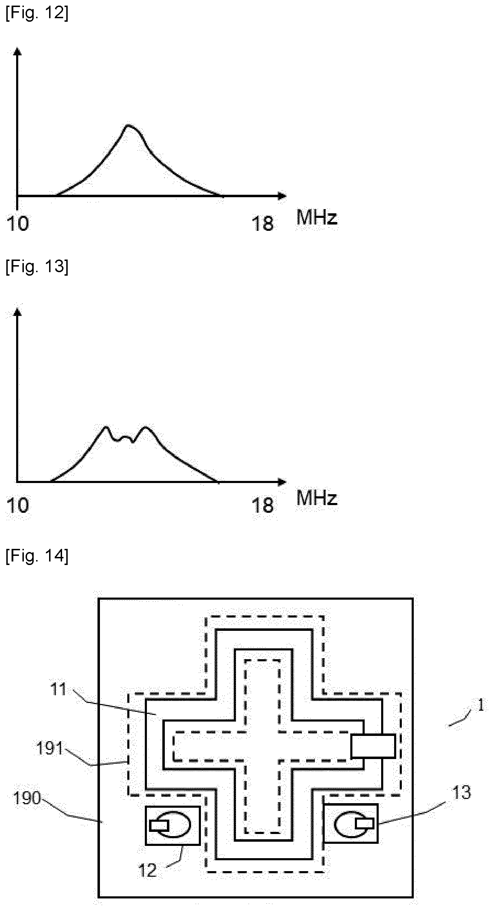

La figure 14 illustre une variante de réalisation dans laquelle les modules 12 et 13 sont disposés à la périphérie de la zone 191. Dans cette variante, le circuit d'antenne du module 11 suit une forme en croix, et les modules de détection 12 et 13 sont placés à proximité de ce circuit d'antenne, en dehors de la zone 191.

On notera que la forme de la zone 191 pourra également être prévue pour qu'un des modules de détection 12-13 soit placé dans une ouverture au centre de cette zone, et qu'un autre des modules de détection 12-13 soit placé en périphérie.

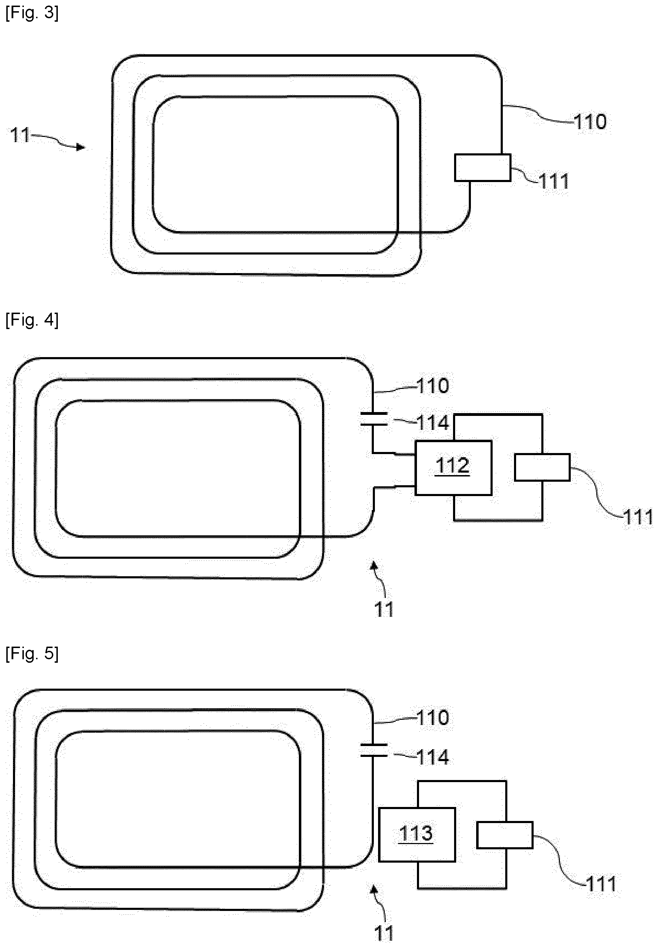

La figure 3 est une représentation schématique d'un module de déclaration 11 selon un exemple de mise en œuvre. Dans cet exemple, le module 11 inclut un résonateur LC. Le module 11 est ici pourvu d'une puce RFID 111. La puce 111 est configurée pour fournir un identifiant du module 11, et éventuellement un identifiant des modules de détection associés 12 et 13, lors d'une requête provenant du lecteur 10. Dans ce cas, la puce 111 peut contenir un identifiant des modules de détections associés 12 et 13 correspondant à leur identifiant unique stocké dans leur puce RFID associée, ou encore un second identifiant, non unique si on considère l'ensemble des identifiants des modules de détection possibles, mais associé de façon unique à la puce 111 du module de déclaration 11.

La puce 111 peut également contenir des informations quant aux caractéristiques du circuit LC des modules de détection qui lui sont associés, ou encore des informations quant aux modes de fonctionnement de ces modules de détection. Ainsi, le lecteur 10 récupère, en même temps que les identifiants des modules de détection liés au module de déclaration 11, des informations sur leurs caractéristiques et peut en déduire, directement, de la détection d'un module de détection ou non, des caractéristiques sur l'environnement proche.

Le résonateur LC inclut ici un enroulement 110 de plusieurs spires, formant un circuit d'antenne et une inductance pour le résonateur LC. L'enroulement 110 peut présenter une aire de 100 cm², afin de favoriser une communication avec le lecteur 10. L'enroulement 110 est ici connecté aux bornes de la puce RFID 111. La puce RFID 111 peut inclure une capacité intégrée pour le résonateur LC (par exemple de 23,5pF, ou encore de 97pF). La capacité sera par exemple définie pour être le plus robuste possible à l'environnement pour le module de déclaration 11, en présentant par exemple une valeur relativement élevée de 97pF. La capacité sera par exemple d'une valeur plus basse pour les modules de détection 12 et 13, par exemple de 23,5pF. Le résonateur LC du module 11 est insensible ou peu sensible aux variations du paramètre environnemental à étudier.

La figure 4 est une représentation schématique d'un module de déclaration 11 selon un autre exemple de mise en œuvre. Dans cet exemple, le module 11 inclut également un résonateur LC. Le module 11 est ici aussi pourvu d'une puce RFID 111. La puce 111 est configurée pour fournir un identifiant du module 11, et éventuellement un identifiant des modules de détection associés 12 et 13, lors d'une requête provenant du lecteur 10. Le résonateur LC inclut ici un enroulement 110 de plusieurs spires, formant un circuit d'antenne et une inductance pour le résonateur LC. L'enroulement 110 est connecté à un condensateur 114.

L'enroulement 110 est ici connecté à un circuit d'adaptation 112. La puce 111 est également connectée aux bornes du circuit d'adaptation 112. L'enroulement 110 et le condensateur 114 peuvent former un résonateur LC principal. Une antenne inductive auto-résonante telle que décrite dans le document FR2961353 peut notamment être utilisée. Une telle antenne est particulièrement adaptée à une utilisation en milieu humide, avec une fréquence de résonance peu affectée par des variations d'humidité à proximité. Le circuit d'adaptation 112 peut inclure un enroulement de plus petite dimension pour former un circuit résonant avec la puce RFID 111, et éventuellement pour permettre l'adaptation de la puce 111 au résonateur LC principal. Les résonateurs LC du module 11 sont insensibles ou peu sensibles aux variations du paramètre environnemental à étudier.

La figure 5 est une représentation schématique d'un module de déclaration 11 selon un autre exemple de mise en œuvre. Dans cet exemple, le module 11 inclut également un résonateur LC. Le module 11 est ici aussi pourvu d'une puce RFID 111. La puce 111 est configurée pour fournir un identifiant du module 11, et éventuellement un identifiant des modules de détection associés 12 et 13, lors d'une requête provenant du lecteur 10. Le résonateur LC inclut ici un enroulement 110 de plusieurs spires, formant un circuit d'antenne et une inductance pour le résonateur LC. L'enroulement 110 est connecté à un condensateur 114.

L'enroulement 110 est ici couplé magnétiquement à un circuit d'adaptation 113. La puce 111 est connectée aux bornes du circuit d'adaptation 113. L'enroulement 110 et le condensateur 114 peuvent former un résonateur LC principal. Le circuit d'adaptation 113 peut inclure un enroulement de plus petite dimension pour former un circuit résonant avec la puce RFID 111, et éventuellement pour permettre l'adaptation de la puce 111 au résonateur LC principal. Les résonateurs LC du module 11 sont insensibles ou peu sensibles aux variations du paramètre environnemental à étudier.

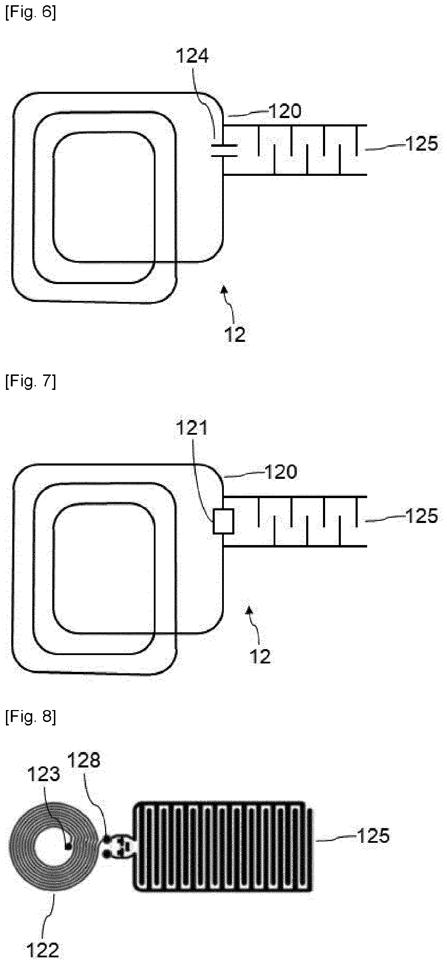

La figure 6 est une représentation schématique d'un module de détection 12 selon un exemple de mise en œuvre. Dans cet exemple, le module 12 se présente sous la forme d'un résonateur LC. Le module 12 est ici dépourvu de puce RFID. Le module 12 comporte ici un enroulement 120 de plusieurs spires conductrices, destinées à former l'inductance du circuit LC. L'enroulement 120 est ici connecté aux bornes d'un condensateur 124. Le condensateur 124 est insensible ou peu sensible aux variations du paramètre environnemental à étudier. La structure du condensateur 124 peut par exemple être protégée du paramètre environnemental par une ou plusieurs couches de protection appropriées. Le condensateur 124 forme ici une partie fixe de la capacité du circuit LC. Un condensateur additionnel 125 est connecté aux bornes du condensateur 124 décrit précédemment. Ce condensateur additionnel 125 est sensible aux variations du paramètre environnemental. Le condensateur additionnel 125 peut par exemple être mis au contact d'un fluide, dans lequel on souhaite détecter la variation du paramètre environnemental. Le condensateur additionnel 125 peut par exemple présenter une partie non recouverte d'une couche de protection. Le condensateur additionnel 125 comporte ici une géométrie en peigne, avec des lignes métalliques interdigitées, de sorte que sa capacité est fortement dépendante des caractéristiques électriques du milieu proche ou d'un fluide en contact. Le condensateur 125 peut par exemple être mis en contact électrique d'un fluide dans lequel on souhaite détecter la variation du paramètre environnemental, ou bien être mis en présence proche du fluide et isolé électriquement de celui-ci par une couche isolante de faible épaisseur assurant une isolation galvanique.

On peut par exemple décrire une application à la détection de l'eau. L'eau (douce ou salée) est caractérisée par une forte constante diélectrique (εᵣ=ε/εο∼80). L'eau, contenant des sels en solution, se caractérise par une conductivité électrique croissante avec la concentration de sel.

Un condensateur à géométrie en peigne présente une capacité dépendant de la constante diélectrique des matériaux à proximité, et les pertes de la capacité (résistance parallèle) sont dépendantes de la conductivité des matériaux à proximité (de manière plus importante s'il y a contact électrique avec le matériau). La géométrie en peigne du condensateur 125 permet l'équivalent d'un condensateur formé de deux lignes parallèles d'une plus grande longueur, pratiquement l'équivalent de la longueur déployée du méandre formé dans la géométrie en peigne, environ 25cm pour un exemple tel que celui de la figure 8 décrite ci-après.

La capacité entre deux lignes métalliques parallèles est proportionnelle à la constante diélectrique du matériau baignant ces deux lignes. L'épaisseur de matériau autour des lignes métalliques contribuant à la valeur de capacité est pratiquement de l'ordre de l'écartement entre les deux lignes. La valeur de capacité dans le 'vide' est de l'ordre de quelques 10pF à 30pF par mètre de ligne selon le rapport entre la largeur des lignes et l'écartement entre celles-ci. Cette valeur de capacité est multipliée par un facteur de plusieurs dizaines lorsque le matériau autour des lignes métalliques est imprégné d'eau (constante diélectrique εᵣ =εᵣ/εo∼80).

La conductivité de l'eau induit des pertes qui se traduisent par une résistance parallèle suivant la quantité d'ions dissout, de l'ordre du kilo ohms par mètre de ligne avec de l'eau de mer et dans le cas où les lignes métalliques sont électriquement isolées. La résistance parallèle est beaucoup plus faible dans le cas où une conduction électrolytique peut s'établir entre les deux lignes métalliques.

La figure 7 est une représentation schématique d'un module de détection 12 selon un autre exemple de mise en œuvre. Dans cet exemple, le module 12 se présente également sous la forme d'un résonateur LC. Le module 12 est ici muni d'une puce RFID 121. Le module 12 comporte ici un enroulement 120 de plusieurs spires conductrices, destinées à former l'inductance du circuit LC. L'enroulement 120 est ici connecté aux bornes de la puce RFID 121. La puce RFID 121 inclut ici une capacité (par exemple de 23,5pF). La capacité de la puce 121 est insensible ou peu sensible aux variations du paramètre environnemental à étudier. La capacité interne de la puce 121 peut intrinsèquement être protégée du paramètre environnemental par une ou plusieurs couches de protection de cette puce 121. La capacité de la puce 121 forme ici une partie fixe de la capacité du circuit LC. Un condensateur additionnel 125 est connecté aux bornes de la puce 121. Le condensateur additionnel 125 est sensible aux variations du paramètre environnemental. Le condensateur additionnel 125 peut par exemple être mis au contact d'un fluide, dans lequel on souhaite détecter la variation du paramètre environnemental, ou bien être mis en présence proche du fluide et isolé électriquement de celui-ci par une couche isolante de faible épaisseur. Le condensateur additionnel 125 peut par exemple présenter une partie non recouverte d'une couche de protection. Le condensateur additionnel 125 comporte ici une géométrie en peigne, de sorte que sa capacité est fortement dépendante des caractéristiques électriques du milieu proche ou d'un fluide en contact..

On peut par exemple prévoir que l'enroulement 120 occupe un carré de 14mm de côté, incluant 19 spires ménagées sur deux faces d'un substrat, le pas des spires étant de 0,4mm et la largeur des spires étant de 0,2mm.

Les condensateurs 124 et 125 (ou le condensateur de la puce 121 et le condensateur additionnel 125) sont ici illustrés en parallèle. On peut cependant également envisager une connexion en série de ces condensateurs, pour inverser par exemple le sens de transition entre les deux modes de fonctionnement : l'influence de la présence d'eau (en particulier la présence d'eau salée) fait chuter l'impédance du condensateur 125, établissant de cette manière un mode de fonctionnement nominal avec une résonance directe entre l'inductance 123 et le condensateur 124.

La fréquence de résonance du circuit LC du module 12 dans son premier mode de fonctionnement est avantageusement proche de la fréquence de résonance du circuit LC du module 11.

Lorsque le module de déclaration 11 est associé à plusieurs modules de détection différents et lorsqu'il est envisagé une analyse de la réponse en fréquence du bloc de détection 18, les différents modules de détection présenteront avantageusement des fréquences de résonance distinctes.

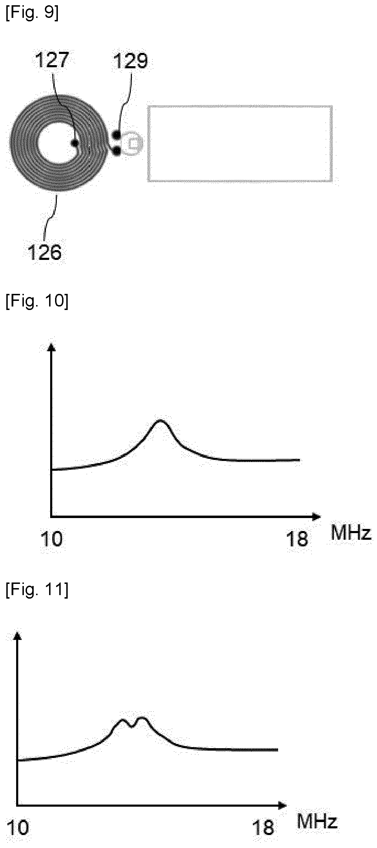

Les figures 8 et 9 illustrent des pistes conductrices pouvant être formées sur deux faces opposées d'un substrat, afin de former sélectivement un module 12 correspondant soit à la configuration de la figure 6, soit à la configuration de la figure 7.

La figure 8 illustre la configuration sur une face du substrat. Des pastilles 128 sont ménagées entre des spires 122 et des pistes interdigitées d'un condensateur additionnel 125. Les spires 122 appartiennent à l'enroulement 120. Une extrémité des spires 122 est connectée à une pastille 123. Une autre extrémité des spires 122 est connectée à une des pastilles 128.

La figure 9 illustre la configuration sur une autre face du substrat, vue par transparence depuis le même point de vue que la figure 8. Des pastilles 129 sont ménagées à côté de spires 126. Les pastilles 129 sont en vis-à-vis des pastilles 128. La pastille 127 est en vis-à-vis de la pastille 123. Les pastilles 123 et 127 sont connectées électriquement.

Les pastilles 128 et 129 en vis-à-vis sont connectées électriquement. Des plots de raccordement destinés à connecter sélectivement soit une puce RFID 121, soit un condensateur 124, sont connectés aux pastilles 128 et 129.

Pour différencier la puce RFID 121 de la puce RFID 111 du module 11, celles-ci présentent avantageusement des identifiants différents. Les modules peuvent également être différenciés par des mémoires mémorisant des informations différentes, lues par le lecteur 10.

Les diagrammes des figures 10 et 11 illustrent les réponses en fréquence respectives, enregistrées par un lecteur 10 :
- d'un module de déclaration 11 et d'un module de détection 12 couplé, ce module de détection ayant une fréquence de résonance dans son second mode, par exemple suite à une dégradation du fait d'une variation d'un paramètre environnemental ;
- d'un module de déclaration 11 et d'un module de détection 12 couplé, ce module de détection ayant une fréquence de résonance dans son premier mode, par exemple en l'absence de variation suffisante d'un paramètre environnemental.

Dans le présent cas de figure, le module de détection 12 a une fréquence de résonance dans son premier mode qui est centrée sur la fréquence de résonance du module de déclaration 11. On constate que la réponse en fréquence pour le premier cas de figure présente un profil simple correspondant aux caractéristiques du circuit LC du module de déclaration 11. On constate que la réponse en fréquence dans le second cas de figure présente un profil complexe avec deux pics séparés par un creux, liée à l'intégrité du circuit LC du module de détection 12, couplé au circuit LC du module de déclaration 11.

Les figures 12 et 13 illustrent les réponses en fréquence respectives enregistrées par un lecteur 10 :
- d'un module de déclaration 11 et de modules de détection 12 couplés, ces modules de détection ayant été dégradés du fait d'une variation d'un paramètre environnemental ;
- d'un module de déclaration 11 et de modules de détection 12 couplés, ces modules de détection ayant été conservés intacts en l'absence de variation suffisante d'un paramètre environnemental.

Dans le présent cas de figure, les modules de détection 12 ont des fréquences de résonance dans leur premier mode qui sont réparties de part et d'autre de la fréquence de résonance du module de déclaration 11, par exemple à 13,3 MHz et 13,9MHz pour une fréquence de résonance de 13,6MHz du module de déclaration 11.

On constate que la réponse en fréquence pour le premier cas de figure présente un profil simple correspondant aux caractéristiques du circuit LC du module de déclaration 11. On constate que la réponse en fréquence dans le second cas de figure présente un profil complexe avec des pics séparés par plusieurs creux, liés à l'intégrité des circuits LC des modules de détection 12, couplés au circuit LC du module de déclaration 11.

Dans les exemples précédents, les modules de détection sont couplés au circuit d'antenne du module de déclaration 11. Un module de détection 12 comprenant une puce RFID peut ainsi communiquer avec le lecteur 10, le circuit d'antenne du module de déclaration servant d'antenne relais. On peut également prévoir qu'un module de détection 12 comprenant une puce RFID puisse communiquer indépendamment avec le lecteur 10.

Si le lecteur 10 est porté par un robot d'inspection, le système 1 selon l'invention permet de trancher entre les deux hypothèses suivantes si aucun module de déclaration n'est détecté :
- la zone inspectée ne contient pas de bloc de détection 18 ;
- la zone inspectée contient un bloc de détection 18 dont le module de déclaration 11 est défaillant (auquel cas des modules de détection peuvent être accessibles mais l'information qu'ils renvoient est inutilisable).

Si un module de déclaration est détecté ou identifié, le dispositif de lecture 10 peut analyser le dispositif de détection afin de déterminer l'état des modules de détection associés. L'analyse du bloc de détection 18 peut s'effectuer par un relevé de sa réponse en fréquence ou bien par un inventaire des puces RFID lues par le dispositif de lecture 10.

Le robot peut mettre en œuvre une étape de positionnement de son lecteur RFID en face d'un module de déclaration 11, par exemple par un arrêt à une position fixe, ou par un ralentissement du déplacement du robot, pour disposer d'un temps suffisant pour détecter et analyser le module de déclaration 11 le plus proche pour analyser le bloc de détection 18.

Le lecteur 10 identifie le module de déclaration 11 le plus proche (soit directement par la réponse d'une puce RFID du module de déclaration 11, soit par consultation d'une base de données identifiant le module de déclaration 11 en fonction de la position du lecteur 10). Le module de déclaration 11 peut renvoyer des informations relatives aux modules de détection 12 et 13 qui lui sont associés, par exemple le nombre de modules de détection qui lui sont associés, leur type, leur identifiant s'ils disposent d'une puce RFID, ou leur ordre dans une répartition de fréquences d'accord.

Un module de détection, s'il dispose d'une puce RFID, peut renvoyer des informations relatives au module de déclaration auquel il est associé, le numéro d'identification du module de déclaration par exemple, et des informations le concernant. Lorsque chacun des modules de détection 12 inclut une puce RFID, le lecteur 10 peut faire un inventaire des puces RFID répondant pour déterminer l'état de chacun de ces modules de détection 12, en comparant à l'inventaire des puces RFID déclarées par le module de déclaration 11. Toutes les puces RFID identifiées en réponse sont considérées comme en mode de fonctionnement nominal. Par contre, si le module de déclaration 11 liste un module de détection 12 dont la puce RFID ne répond pas, on peut considérer que ce module de détection 12 a détecté une variation d'un paramètre d'environnement et est en mode de fonctionnement dégradé.

Lorsque les modules de détection 12 n'incluent pas de puce RFID, le lecteur 10 peut faire une analyse de réponse en fréquence sur une plage prédéfinie de fréquence, par exemple quelques MHz pour une fréquence centrale de 13,56MHz). Le niveau de champ électromagnétique produit par le lecteur 10 dans la zone d'investigation peut être changé par un changement de la puissance délivrée à l'antenne du lecteur 10, dans une plage donnée, par exemple en passant de 1W à 5W. Le niveau de champ électromagnétique produit dans la zone d'investigation peut aussi être changé par une variation de la distance entre l'antenne du lecteur 10 et la zone d'investigation. Ce paramètre de niveau de champ peut être utilisé dans l'analyse du bloc de détection 18. Il est ainsi possible de nuancer la liste des puces RFID identifiées par inventaire. Ceci peut être un moyen pour révéler des états intermédiaires d'un module de détection dans sa transition entre son premier mode et son second mode de fonctionnement. L'interprétation de la réponse en fréquence permet de décider si le résonateur de chacun des modules de détection 12 est dégradé ou non.

On a décrit ici un système de détection 1 constitué d'un bloc de détection 18 comprenant deux modules de détection 12 et 13. On notera que l'invention n'est nullement limitée à ce cas particulier et pourrait également être mise en œuvre avec un bloc de détection comprenant un unique module de détection ou plus de deux modules de détection.

On a décrit ici un système dans lequel le bloc de détection 18, comprenant le module de déclaration 11 et le ou les modules de détection, peut être intégralement formé sur un seul support, et dans lequel les différents modules de déclaration et de détection ne sont pas en lien électrique direct. Ils sont uniquement en couplage magnétique, ce qui permet d'isoler le module de déclaration 11 de l'environnement variable pour qu'il ne soit pas altéré par cet environnement, et permet également, si besoin, de faire en sorte que les modules de détection passent de leur premier à leur deuxième mode de fonctionnement dans des conditions environnementales distinctes, pour une meilleure détection de l'état de l'environnement.

## Revendications

1. Système de détection de l'évolution d'un paramètre environnemental (1), comprenant :
- au moins un module de détection (12) incluant un circuit résonant LC sensible à une évolution dudit paramètre environnemental, configuré pour fonctionner, en fonction de la valeur dudit paramètre environnemental, soit dans un premier mode dans lequel ledit circuit résonant présente une fréquence de résonance comprise dans une plage prédéfinie pour laquelle le module de détection est détectable par couplage magnétique par excitation dans ladite plage, soit dans un deuxième mode dans lequel ledit circuit résonant présente une fréquence de résonance hors de ladite plage ou une absence de fréquence de résonance ;
- un module de déclaration (11) distinct du module de détection et disposé à proximité dudit module de détection (12), configuré pour communiquer sans contact en champ proche même en cas de variation de la valeur dudit paramètre environnemental, et configuré pour déclarer la présence du module de détection ;
- dans lequel dans une première configuration, le module de déclaration (11) inclut un circuit résonant LC incluant un circuit d'antenne (110) de communication sans contact en champ proche, ledit circuit résonant LC du module de détection (12) inclut un circuit d'antenne (120) couplé magnétiquement au circuit d'antenne du circuit résonant du module de déclaration (11), la signature d'une réponse en fréquence du circuit d'antenne du module de déclaration (11) étant différente en fonction du premier ou du deuxième mode du circuit résonant du module de détection (12), ou
- dans lequel dans une deuxième configuration, le module de détection (12) inclut une puce d'identification radiofréquence (121) connectée au circuit résonant LC et un circuit d'antenne (120) configuré pour communiquer sans contact en champ proche, dans lequel ledit module de déclaration (11) inclut un circuit résonant LC incluant un circuit d'antenne (110) de communication sans contact en champ proche et le module de déclaration inclut une puce d'identification radiofréquence (111) connectée au circuit résonant LC et mémorisant un identifiant du module de détection (12).

2. Système de détection (1) selon la revendication 1, dans lequel le circuit résonant LC du module de détection (12) comporte un élément électrique (125) prévu pour être mis en contact avec un fluide environnant et susceptible de voir ses propriétés électriques modifiées en fonction de la valeur du paramètre environnemental dans le fluide avec lequel il est en contact.

3. Système de détection (1) selon la revendication 2, dans lequel le module de déclaration (11) est recouvert d'un élément de protection (191) ne recouvrant pas ledit élément électrique (125) du circuit résonant LC du module de détection (12).

4. Système de détection (1) selon la revendication 2 ou 3, dans lequel l'élément électrique est un condensateur (125) dont des parties conductrices ou diélectriques sont susceptibles d'être altérées par variation de la valeur du paramètre environnemental.

5. Système de détection (1) selon la revendication 4, dans lequel ledit condensateur (125) comporte des pistes conductrices interdigitées.

6. Système de détection selon l'une quelconque des revendications précédentes dans la deuxième configuration, comprenant en outre un lecteur (10) sans contact en champ proche, configuré pour récupérer l'identifiant du module de détection (12) mémorisé dans le module de déclaration (11), configuré pour requérir la fourniture de l'identifiant du module de détection par ledit module de détection (12), et configuré pour déterminer si le module de détection (12) est dans son premier mode ou dans son deuxième mode en fonction d'une réponse ou d'une absence de réponse du module de détection (12).

7. Système de détection selon la revendication 6, dans lequel le lecteur (10) sans contact est adapté pour requérir la fourniture de l'identifiant dudit module de détection (12), suivant plusieurs niveaux de champ appliqué.

8. Système, comprenant une conduite flexible (90) et un système de détection (1) selon l'une quelconque des revendications précédentes, dont ledit module de détection et ledit module de déclaration sont fixés dans l'épaisseur de la conduite à proximité de sa surface externe.

9. Système selon la revendication 8, dans lequel ledit système de détection inclut un dispositif de lecture (10) configuré pour se déplacer le long d'une face de la conduite flexible (90).

## Patentansprüche

1. System zur Detektion des Verlaufs eines Umweltparameters (1), beinhaltend:
- mindestens ein Detektionsmodul (12), das einen LC-Resonanzkreis umfasst, der gegenüber einem Verlauf des Umweltparameters empfindlich ist und dazu konfiguriert ist, in Abhängigkeit von dem Wert des Umweltparameters entweder in einem ersten Modus, in dem der Resonanzkreis eine Resonanzfrequenz aufweist, die in einem vordefinierten Bereich liegt, in welchem das Detektionsmodul durch magnetische Kopplung durch Erregung in dem Bereich detektierbar ist, oder in einem zweiten Modus, in dem der Resonanzkreis eine Resonanzfrequenz außerhalb des Bereichs oder keine Resonanzfrequenz aufweist, zu arbeiten;
- ein Meldemodul (11), das von dem Detektionsmodul getrennt ist und in der Nähe des Detektionsmoduls (12) angeordnet ist, das dazu konfiguriert ist, auch bei einer Änderung des Werts des Umweltparameters kontaktlos per Nahfeldkommunikation zu kommunizieren, und dazu konfiguriert ist, die Anwesenheit des Detektionsmoduls zu melden;
- wobei in einer ersten Konfiguration das Meldemodul (11) einen LC-Resonanzkreis umfasst, der einen Antennenkreis (110) zur kontaktlosen Nahfeldkommunikation umfasst, der LC-Resonanzkreis des Detektionsmoduls (12) einen Antennenkreis (120) umfasst, der mit dem Antennenkreis des Resonanzkreises des Meldemoduls (11) magnetisch gekoppelt ist, wobei die Signatur einer Frequenzantwort des Antennenkreises des Meldemoduls (11) in Abhängigkeit von dem ersten oder dem zweiten Modus des Resonanzkreises des Detektionsmoduls (12) unterschiedlich ist, oder
- wobei in einer zweiten Konfiguration das Detektionsmodul (12) einen Funkfrequenzidentifikationschip (121), der mit dem LC-Resonanzkreis verbunden ist, und einen Antennenkreis (120), der zur kontaktlosen Nahfeldkommunikation konfiguriert ist, umfasst, wobei das Meldemodul (11) einen LC-Resonanzkreis umfasst, der einen Antennenkreis (110) zur kontaktlosen Nahfeldkommunikation umfasst, und das Meldemodul einen Funkfrequenzidentifikationschip (111) umfasst, der mit dem LC-Resonanzkreis verbunden ist und eine Kennung des Detektionsmoduls (12) speichert.

2. Detektionssystem (1) nach Anspruch 1, wobei der LC-Resonanzkreis des Detektionsmoduls (12) ein elektrisches Element (125) umfasst, das dazu vorgesehen ist, mit einem umgebenden Fluid in Kontakt gebracht zu werden, und dessen elektrische Eigenschaften sich in Abhängigkeit von dem Wert des Umweltparameters in dem Fluid, mit dem es in Kontakt ist, ändern können.

3. Detektionssystem (1) nach Anspruch 2, wobei das Meldemodul (11) von einem Schutzelement (191) abgedeckt ist, welches das elektrische Element (125) des LC-Resonanzkreises des Detektionsmoduls (12) nicht abdeckt.

4. Detektionssystem (1) nach Anspruch 2 oder 3, wobei das elektrische Element ein Kondensator (125) ist, dessen leitende oder dielektrische Teile sich durch eine Änderung des Werts des Umweltparameters verändern können.

5. Detektionssystem (1) nach Anspruch 4, wobei der Kondensator (125) ineinandergreifende Leiterbahnen umfasst.

6. Detektionssystem nach einem beliebigen der vorhergehenden Ansprüche in der zweiten Konfiguration, das ferner einen kontaktlosen Nahfeldleser (10) beinhaltet, der dazu konfiguriert ist, die Kennung des Detektionsmoduls (12), die in dem Meldemodul (11) gespeichert ist, wiederzuerlangen, dazu konfiguriert ist, die Bereitstellung der Kennung des Detektionsmoduls durch das Detektionsmodul (12) zu verlangen, und dazu konfiguriert ist, in Abhängigkeit von einer Antwort bzw. keiner Antwort des Detektionsmoduls (12) zu bestimmen, ob das Detektionsmodul (12) in seinem ersten Modus oder in seinem zweiten Modus ist.

7. Detektionssystem nach Anspruch 6, wobei der kontaktlose Leser (10) dazu angepasst ist, die Bereitstellung der Kennung des Detektionsmoduls (12) gemäß mehreren angelegten Feldstärken zu verlangen.

8. System, das eine flexible Leitung (90) und ein Detektionssystem (1) nach einem beliebigen der vorhergehenden Ansprüche beinhaltet, wobei das Detektionsmodul und das Meldemodul in der Dicke der Leitung in der Nähe ihrer äußeren Oberfläche befestigt sind.

9. System nach Anspruch 8, wobei das Detektionssystem eine Lesevorrichtung (10) umfasst, die dazu konfiguriert ist, sich entlang einer Fläche der flexiblen Leitung (90) zu bewegen.

## Claims

1. System for detecting the evolution of an environmental parameter (1), comprising:
- at least one detection module (12) including an LC resonant circuit sensitive to the evolution of said environmental parameter, configured so as to operate, depending on the value of said environmental parameter, either in a first mode in which said resonant circuit has a resonant frequency contained within a predefined range for which the detection module is able to be detected through magnetic coupling through excitation within said range, or in a second mode in which said resonant circuit has a resonant frequency outside said range or does not have a resonant frequency;
- a declaration module (11) separate from the detection module and arranged near said detection module (12), configured so as to communicate contactlessly in near-field mode even in the event of a variation in the value of said environmental parameter, and configured so as to declare the presence of the detection module;
- wherein, in a first configuration, the declaration module (11) includes an LC resonant circuit including an antenna circuit (110) for near-field contactless communication, said LC resonant circuit of the detection module (12) includes an antenna circuit (120) coupled magnetically to the antenna circuit of the resonant circuit of the declaration module (11), the signature of a frequency response of the antenna circuit of the declaration module (11) being different depending on the first or the second mode of the resonant circuit of the detection module (12), or
- wherein, in a second configuration, the detection module (12) includes a radiofrequency identification chip (121) connected to the LC resonant circuit and an antenna circuit (120) configured so as to communicate contactlessly in near-field mode, wherein said declaration module (11) includes an LC resonant circuit including an antenna circuit (110) for near-field contactless communication and the declaration module includes a radiofrequency identification chip (111) connected to the LC resonant circuit and storing an identifier of the detection module (12).

2. Detection system (1) according to Claim 1, wherein the LC resonant circuit of the detection module (12) comprises an electrical element (125) intended to be placed in contact with a surrounding fluid and able to have its electrical properties modified on the basis of the value of the environmental parameter in the fluid with which it is in contact.

3. Detection system (1) according to Claim 2, wherein the declaration module (11) is covered by a protective element (191) that does not cover said electrical element (125) of the LC resonant circuit of the detection module (12).

4. Detection system (1) according to Claim 2 or 3, wherein the electrical element is a capacitor (125) whose conductive or dielectric parts are able to be altered by a variation in the value of the environmental parameter.

5. Detection system (1) according to Claim 4, wherein said capacitor (125) comprises interdigitated conductor tracks.

6. Detection system according to any one of the preceding claims in the second configuration, furthermore comprising a near-field contactless reader (10) configured so as to retrieve the identifier of the detection module (12) stored in the declaration module (11), configured so as to request the provision of the identifier of the detection module by said detection module (12), and configured so as to determine whether the detection module (12) is in its first mode or in its second mode on the basis of a response or absence of a response from the detection module (12).

7. Detection system according to Claim 6, wherein the contactless reader (10) is designed to request the provision of the identifier of said detection module (12) according to a plurality of applied field levels.

8. System comprising a flexible pipe (90) and a detection system (1) according to any one of the preceding claims, in which said detection module and said declaration module are fixed in the thickness of the pipe near its outer surface.

9. System according to Claim 8, wherein said detection system includes a readout device (10) configured so as to move along a face of the flexible pipe (90).
